# EUROPÄISCHE PATENTSCHRIFT

(11) **EP 1 287 571 B1**
(45) Veröffentlichungstag und Bekanntmachung des Hinweises auf die Patenterteilung: **14.07.2010**
(21) Anmeldenummer: 01931426.9
(22) Anmeldetag: 06.04.2001
(51) Int. Cl.: H01M 8/02, H01M 8/12, C22C 38/18

(54) **HOCHTEMPERATURWERKSTOFF**
MATERIAL USED AT HIGH TEMPERATURES
MATERIAU POUR HAUTES TEMPERATURES

(30) Priorität: 20.05.2000 DE 10025108
(43) Veröffentlichungstag der Anmeldung: 05.03.2003
(73) Patentinhaber: Forschungszentrum Jülich GmbH, 52425 Jülich (DE)
(72) Erfinder: QUADAKKERS, Willem, Joseph, NL-6363 EG Wijnandrade (NL); SHEMET, Vladimir, 52428 Jülich (DE); SINGHEISER, Lorenz, 52428 Jülich (DE)
(86) Internationale Anmeldenummer: PCT/DE2001/001415
(87) Internationale Veröffentlichungsnummer: WO 2001/091215

(56) Entgegenhaltungen:
- WO-A-99/25890
- DE-C- 4 227 603
- US-A- 5 902 692
- US-A- 5 942 349
- PATENT ABSTRACTS OF JAPAN vol. 1996, no. 11, 29. November 1996 (1996-11-29) & JP 08 188853 A (SUMITOMO METAL IND LTD), 23. Juli 1996 (1996-07-23)

## Beschreibung

Die Erfindung betrifft einen Hochtemperaturwerkstoff, insbesondere einen Hochtemperaturwerkstoff für eine bipolare Platte einer Hochtemperatur-Brennstoffzelle.

Eine Hochtemperatur-Brennstoffzelle (Solid Oxide Fuel Cell - SOFC) ermöglicht eine direkte Umwandlung von chemischer in elektrische Energie. Der Brennstoff (H₂, CH₄, CO etc.) wird von einem Oxidationsmittel (O₂, Luft) durch einen Sauerstoffleitenden Feststoffelektrolyten (Y-stabilisiertes ZrO₂) getrennt. Bei einer Betriebstemperatur der Zelle von etwa 700°C bis 950°C werden Sauerstoffionen von der Kathodenseite durch den Elektrolyten geleitet, die an der Anode mit dem Brennstoff reagieren. Wegen des Ladungsausgleichs fließt ein Elektronenstrom in gleicher Richtung.

Der Elektrolyt ist mit porösen, katalytisch wirkenden Elektrodenmaterialien beschichtet. Im Allgemeinen besteht die Anode (Brennstoffseite) aus einem Ni/ZrO₂-Cermet, die Kathode (Sauerstoffseite) aus einem Perowskit auf La-Basis.

Um die SOFC-Technik für die Stromerzeugung nutzen zu können, müssen mehrere Zellen zusammengeschaltet werden. Daher ist noch eine weitere Zellkomponente nötig, nämlich die bipolare Platte, die auch Interkonnektor genannt wird. Die bipolare Platte bildet dabei nicht nur das Gas zuleitende Verbindungsglied zwischen den Einzelzellen, sondern auch die tragende Komponente der Zelle.

Eine wesentliche Eigenschaft, die eine Interkonnektorlegierung aufweisen muss, ist eine hohe Oxidationsbeständigkeit in dem Anoden- und Kathodengas bei Betriebstemperatur. Außerdem muss sie, wegen der erforderlichen physikalischen Kompatibilität mit den keramischen Zellkomponenten, einen niedrigen Ausdehnungskoeffizienten (etwa 10 * 10⁻⁶ K⁻¹ bis 12 * 10⁻⁶ K⁻¹) aufweisen. Der jeweilige optimale Ausdehnungskoeffizient hängt dabei vom jeweiligen Zellenkonzept ab. Beispielsweise sind bei anodensubstratgestützten Zellen im allgemeinen etwas höhere Ausdehnungskoeffizienten erforderlich als bei Zellenkonzepten, die auf einem Elektrolyt-Folienkonzept beruhen.

Typische Materialien für Interkonnektorwerkstoffe sind ferritische Chromstähle. Die Oxidationsbeständigkeit dieser Werkstoffe beruht auf der Bildung einer schützenden Oxidschicht auf Cr₂0₃-Basis, die sich bei hohen Temperaturen auf der Oberfläche des Werkstücks ausbildet. Diese Schichten verhalten sich jedoch bei den hohen Betriebstemperaturen instabil. Sie platzen ab und können so den Gasfluss in den Gaskanälen der bipolaren Platte im Langzeitbetrieb beeinträchtigen. Außerdem besitzen die nach langen Zeiten gebildeten, dicken Cr₂0₃-Schichten nachteilig eine geringe elektrische Leitfähigkeit. Ferner bilden sich bei hohem Sauerstoffdruck, wie er regelmäßig auf der Kathodenseite herrscht, flüchtige Chromoxide und/oder -hydroxide, die die Kathode oder die Kathode/Elektrolyt-Grenzfläche "vergiften" und somit die Zellenleistung herabsetzen.

Aus DE 195 47 699 A1 ist eine bipolare Platte aus einer chromoxidbildenden Legierung mit einer Mischoxidschicht zur Erhöhung der Leitfähigkeit und zur Verringerung der Abdampfrate bekannt.

In DE 44 22 624 A1 wird ein Verfahren zum Schutz von chromhaltigen Körpern beschrieben, bei dem eine Schutzschicht aus einem oxidischen Chromat aufgebracht wird. Ein Nachteil dieses Beschichtungsverfahrens ist jedoch, dass sie zu einer Verteuerung der bipolaren Platten führen. Außerdem besitzen die Schichten bei mechanischer Beschädigung während des Betriebs keine Ausheilfähigkeit.

DE 42 27 603 C1 beschreibt eine auf einer Elektrode angeordnete poröse Kontaktschicht mit einer chromoxidbildenden Eisenlegierung mit der Zusammensetzung 0-15 % Al, 0-15 % Wo, Mo und/oder Nb, 0-5 % Y, Ti und/oder Ce, 0-3 % Si, Mn und/oder C, 15-25 % Cr und als Rest Ni und/oder Fe und/oder Co.

Aus US 5,942,349 ist ein chromhaltiger Interkonnektor (Substrat) einer Brennstoffzelle mit einer oxidischen Beschichtung auf der Kathodenseite bekannt. Die Beschichtung weist eine oxidische Oberflächenschicht auf, die mindestens ein Metall M aus der Gruppe (Mn, Fe, Co und Ni) aufweist und eine M-Chromspinell Zwischenschicht zwischen Substrat und oxidischer Oberflächenschicht. Die Zwischenschicht entsteht durch Reaktion des M-Oxids aus der Beschichtung mit dem Chromoxid auf der Oberfläche des Substrates.

Aus US 5,310,431 ist ein Korrosionsstabiler Stahl auf Eisenbasis bekannt, der eine Zusammensetzung aus 0,05-0,1 % C, 8-12 % Cr, 1-5 % Co, 0,5-2,0 % Ni, 0,41-1,0 % Mo, 0,1-0,5 % Ti sowie Rest Eisen aufweist.

In DE 195 46 614 C2 wird eine langzeitstabile oxidationsbeständige, chromoxidbildende Legierung für den Einsatz bei hohen Temperaturen offenbart, welcher bis zu 1 % reaktive Elemente zugesetzt werden.

In WO 99/25890 wird der Hinweis gegeben, dass der Zusatz von mehr als 0,1 % Mangan schädlich für eine Chromoxid bildenden Legierung ist, insbesondere wenn sie für einen Einsatz in einer Hochtemperatur-Brennstoffzelle vorgesehen ist.

Die Aufgabe der Erfindung ist die Schaffung eines Hochtemperaturwerkstoffes, der bei mechanisch induzierten Defekten an der Oberfläche selbst ausheilt. Ferner ist es die Aufgabe der Erfindung, eine bipolare Platte für eine Hochtemperatur-Brennstoffzelle zu schaffen, welche die vorstehend genannten Vorteile aufweist.

Gelöst wird die Aufgabe durch einen Hochtemperaturwerkstoff nach Anspruch 1 sowie durch eine bipolare Platte gemäß Nebenanspruch. Vorteilhafte Ausgestaltungen des Werkstoffes ergeben sich aus den darauf rückbezogenen Ansprüchen.

Der erfindungsgemäße Hochtemperaturwerkstoff nach Anspruch 1 basiert auf einer chromoxidbildenden Eisenlegierung und ist für den Einsatz bei Temperaturen bis zu 950°C geeignet. Er umfasst 0,01 bis 0,4 Gew.-% des sauerstoffaffinen Elements La, 0,2 bis 1,0 Gew.-% Mn, welches mit Chromoxid eine Spinellphase vom Typ MnCr₂0₄ bildet, sowie Ti (bis zu 0,4 Gew.-%), welches die elektrische Leitfähigkeit von Oxiden auf Cr-Basis erhöht.

Der anspruchsgemäße Hochtemperaturwerkstoff nach Anspruch 1 weist ein sauerstoffaffines Element auf. Unter einem sauerstoffaffinen Element im Sinne dieser Erfindung ist ein chemisches Element zu verstehen, welches eine höhere Affinität zum Sauerstoff aufweist als Chrom. Zu diesen Elementen gehören insbesondere Y, Ce, Hf, Zr und La. Die Konzentration dieses sauerstoffaffinen Elements La liegt vorteilhaft zwischen 0,01 und 0,4 Gew.-%, sofern es sich um ein reines Element handelt. Der Zusatz dieses reaktiven Elements erhöht regelmäßig die Lebensdauer des Hochtemperaturwerkstoffs. Weiterhin bewirkt es, dass der Transport von Sauerstoff und Metallionen durch Cr₂O₃ verlangsamt oder auch ganz gestoppt wird. Bilden sich Cr₂O₃-Deckschichten auf der Legierung bzw. dem Hochtemperaturwerkstoff, so diffundiert das reaktive Element in die Deckschichten hinein. Infolge des Diffusionsprozesses wird das sauerstoffaffine Element in die Oxidkorngrenzen eingebaut und blockiert dann die Transportwege für Metall- und Sauerstoffionen. Die weitere Bildung von Cr₂O₃ wird hierdurch verlangsamt. Das verlangsamte Wachstum führt wiederum zu einer verbesserten Haftung der Cr₂O₃-Deckschicht auf der Legierung. Aufgrund dieser zwei Wirkungen wird insbesondere bei einem Einsatz unter hohen Temperaturen die Funktionsweise der Legierung bzw. eines aus dieser Legierung hergestellten Bauteils wesentlich verbessert sowie ihre bzw. seine Lebensdauer erheblich erhöht.

Weiterhin weist der erfindungsgemäße Hochtemperaturwerkstoff Mangan auf, welches bei hohen Temperaturen, wie sie beispielsweise während des Betriebs einer Hochtemperatur-Brennstoffzelle auftreten, mit Cr₂0₃ eine Spinellphase MnCr₂0₄ an der Grenzfläche Oxid/Gas bildet. Dadurch wird die Abdampfrate vom Chromoxid und/oder -hydroxid von der Oberfläche deutlich verringert. Als besonders geeignet erwiesen hat sich dabei das Legierungselement Mn, da dies schon in geringeren Mengen, verglichen mit den anderen genannten Elementen, einen Spinell ausbildet. Mangan ist in Konzentrationen 0,2 bis 1 Gew.-% in dem Hochtemperaturwerkstoff enthalten.

Der Hochtemperaturwerkstoff nach Anspruch 1 weist ferner wenigstens ein drittes Element auf, welches die elektrische Leitfähigkeit von Oxiden auf Cr-Basis erhöht. Als prinzipiell dafür geeignete Elemente sind Zr, Hf, Sr oder Ca, insbesondere aber das Element Ti zu nennen. Der erfindungsgemäße Hochtemperaturwerkstoff enthält als drittes Element Titan. Titan liegt dabei in Konzentrationen von > 0 bis 0,4 Gew.-% vor.

Der erfindungsgemäße Hochtemperaturwerkstoff weist während hoher Temperaturen, wie sie typischerweise im Betrieb einer Hochtemperatur-Brennstoffzelle auftreten, besonders vorteilhafte Eigenschaften auf. Dazu gehören beispielsweise eine gute Oxidationsbeständigkeit, gute elektrische Leitfähigkeit der hier beschriebenen Oxidschicht, gute Oxidschichthaftung und eine geringe Chromoxid bzw. -hydroxidabdampfrate. Zusätzlich offenbart dieser Werkstoff den Vorteil, dass es bei mechanisch induzierten Spannungen, die zu Oberflächendefekten führen können, zu einem automatischen Ausheilen der Oxidschicht kommt.

Der Hochtemperaturwerkstoff weist Chrom in einem Konzentrationsbereich von 17 bis 28 Gew.-% auf (ferritischer Chromstahl). Der genaue Chromanteil richtet sich nach der Betriebstemperatur, in welcher der Werkstoff eingesetzt wird: hohe Betriebstemperaturen erfordern regelmäßig höhere Chromkonzentrationen. Zusätzlich hängt die Konzentration an Chrom von dem gewünschten einzustellenden Ausdehnungskoeffizienten ab: Eine Erhöhung des Chromanteils bewirkt regelmäßig eine Erniedrigung des thermischen Ausdehnungskoeffizienten.

Weiterhin umfasst der erfindungsgemäße Hochtemperaturwerkstoff die Elemente Si und Al nur in Konzentrationen bis maximal 0,2 Gew. %. Die Elemente Si und Al bilden bevorzugt selbst Oxide aus und stören so die Ausbildung des Chromoxids. Ihre Konzentration in dem Werkstoff sollte auf die oben genannten Konzentrationen begrenzt werden. Besonders vorteilhaft sind daher Konzentrationen von Si und/oder Al unterhalb von 0,2 Gew.-%.

Es hat sich als vorteilhaft herausgestellt, wenn die genannte sauerstoffaffine Komponente der Legierung nicht als reines Element, sondern in Form einer Oxiddispersion zugesetzt werden (z.B. La₂0₃). Die auf das reine Element bezogenen Konzentrationsangaben ändern sich dabei für die entsprechenden Oxiddispersionen auf Konzentrationsbereiche von 0,02 bis 0,8 Gew.-%.

In einer weiteren Ausgestaltung des Hochtemperaturwerkstoffs enthält dieser geringe Konzentrationen der üblicherweise in ferritischen Stählen vorhandenen Begleitelemente und Verunreinigungen. Hierzu zählen insbesondere C, N, S, B, P, V und Cu. Die Konzentration der Elemente V und Cu ist jeweils bevorzugt kleiner als 1 Gew.-%, und die Gesamtkonzentration der übrigen Elemente C, N, S, B und P beträgt ebenfalls weniger als 1 Gew.-%.

Vorteilhaft weist der Hochtemperaturwerkstoff in Abhängigkeit von dem geforderten thermischen Ausdehnungskoeffizienten zusätzlich wahlweise die folgenden Elemente, wie Mo, W, Nb, Ta, Re auf. Diese hoch schmelzenden (refraktären) Elemente bewirken im Allgemeinen eine Reduzierung des thermischen Ausdehnungskoeffizienten. Die Konzentration dieser Elemente ist kleiner 10 Gew.-%, bevorzugt kleiner 3 Gew.-%.

In einer weiteren vorteilhaften Ausgestaltung des Hochtemperaturwerkstoffs umfasst dieser weitere Legierungselementen nur insoweit, als dass die Legierung bei Betriebstemperaturen nicht in ein austenitisches Gitter übergeht. Dies kann u. a. dadurch erreicht werden, dass die Ni-Konzentration kleiner als 2 Gew.-%, bevorzugt kleiner 1 Gew.-% ist. Die Ausbildung eines austenitischen Gitters wirkt sich nachteilig auf den Ausdehnungskoeffizienten des Werkstoffes aus, und sollte daher vermieden werden.

Der erfindungsgemäße Hochtemperaturwerkstoff eignet sich mit seinen vorteilhaften Eigenschaften insbesondere für eine bipolare Platte einer Hochtemperatur-Brennstoffzelle SOFC. Er kann aber auch auf anderen Gebieten eingesetzt werden, bei denen eine hohe Oxidations-/Korrosionsbeständigkeit in Kombination mit hoher elektrischer Leitfähigkeit der Oxidschicht bei hohen Temperaturen gefordert wird. Vorteile aus diesem Werkstoff ergeben sich auch, sofern geringe Abdampfraten der Deckschicht erforderlich sind. Hier sind insbesondere der Bereich der Zündkerzen und Elektroden in flüssigen Metallen und Schmelzen zu nennen.

## Patentansprüche

1. Hochtemperaturwerkstoff umfassend eine chromoxidbildende Eisenlegierung mit der Zusammensetzung
a) 17 bis 28 Gew.-% Chrom,
b) 0,01 bis 0,4 Gew.-% La,
c) 0,2 bis 1,0 Gew.-% Mn,
d) > 0 bis 0,4 Gew.-% Ti,
e) weniger als 0,2 Gew.-% Si, und
f) weniger als 0,2 Gew.-% Al.

2. Hochtemperaturwerkstoff nach Anspruch 1, bei dem die chromoxidbildende Eisenlegierung zusätzlich 0,1 bis 0,4 Gew.-% eines Elements oder einer Mischung aus der Gruppe (Y, Ce) aufweist.

3. Hochtemperaturwerkstoff nach Anspruch 1 bis 2, bei dem die chromoxidbildende Eisenlegierung zusätzlich 0,1 bis 0,4 Gew.-% eines Elements oder einer Mischung aus der Gruppe (Hf, Sr, Ca, Zr) aufweiset.

4. Hochtemperaturwerkstoff nach einem der vorhergehenden Ansprüche 1 bis 3, bei dem Mangan als Oxiddispersion in der chromoxidbildenden Eisenlegierung vorliegt.

5. Hochtemperaturwerkstoff nach einem der vorhergehenden Ansprüche 1 bis 4, bei dem die chromoxidbildende Eisenlegierung zusätzlich bis zu 1 Gew.-% wenigstens eines Elements aus der Gruppe (C, N, S, B oder P) aufweist.

6. Hochtemperaturwerkstoffnach einem der vorhergehenden Ansprüche 1 bis 5, bei dem die chromoxidbildende Eisenlegierung zusätzlich bis zu 1 Gew.-% V und/oder Cu aufweist.

7. Hochtemperaturwerkstoff nach einem der vorhergehenden Ansprüche 1 bis 6, bei dem die chromoxidbildende Eisenlegierung bis zu 1 Gew.-% wenigstens eines Elements aus der Gruppe (Mo, W, Nb, Ta oder Re) ausweist.

8. Bipolare Platte aus einem Hochtemperaturwerkstoff nach einem der vorhergehenden Ansprüche 1 bis 7.

9. Zündkerze aus einem Hochtemperaturwerkstoff nach einem der vorhergehenden Ansprüche 1 bis 7.

10. Elektrode aus einem Hochtemperatawerkstoff nach einem der vorhergehenden Ansprüche 1 bis 7.

## Claims

1. High temperature material comprising a chromic oxide forming ferrous alloy with the composition
a) 17 to 28% by weight of chromium,
b) 0.01 to 0.4% by weight of La,
c) 0.2 to 1.0% by weight of Mn,
d) > 0 to 0.4% by weight of Ti,
e) less than 0.2% by weight of Si and
f) less than 0.2% by weight of Al.

2. High temperature material according to claim 1, in which the chromic oxide forming ferrous alloy also has 0.1 to 0.4% by weight of an element or a mixture from the group (Y, Ce).

3. High temperature material according to claim 1 to 2, in which the chromic oxide forming ferrous alloy also has 0.1 to 0.4% by weight of an element or mixture from the group (Hf, Sr, Ca, Zr).

4. High temperature material according to one of the previous claims 1 to 3, in which manganese is present as an oxide dispersion in the chromic oxide forming ferrous alloy.

5. High temperature material according to one of the previous claims 1 to 4, in which the chromic oxide forming ferrous alloy also has up to 1% by weight at least of an element from the group (C, N, S, B or P).

6. High temperature material according to one of the previous claims 1 to 5, in which the chromic oxide forming ferrous alloy also has up to 1% by weight of V and/or Cu.

7. High temperature material according to one of the previous claims 1 to 6, in which the chromic oxide forming ferrous alloy has up to 1% by weight at least of an element from the group (Mo, W, Nb, Ta or Re).

8. Bipolar plate made from a high temperature material according to one of the previous claims 1 to 7.

9. Spark plugs made from a high temperature material according to one of the previous claims 1 to 7.

10. Electrode made from a high temperature material according to one of the previous claims 1 to 7.

## Revendications

1. Matériau haute température comprenant un alliage de fer formant de l'oxyde de chrome, de composition suivante :
a) 17 à 28 % en poids de chrome,
b) 0,01 à 0,4 % en poids de La,
c) 0,2 à 1,0 % en poids de Mn,
d) > 0 à 0,4 % en poids de Ti,
e) moins de 0,2 % en poids de Si, et
f) moins de 0,2 % en poids de Al.

2. Matériau haute température selon la revendication 1, dans lequel l'alliage de fer formant de l'oxyde de fer présente en outre 0,1 à 0,4 % en poids d'un élément ou d'un mélange du groupe (Y, Ce).

3. Matériau haute température selon la revendication 1 à 2, dans lequel l'alliage de fer formant de l'oxyde de chrome présente en outre 0,1 à 0,4 % en poids d'un élément ou d'un mélange du groupe (Hf, Sr, Ca, Zr).

4. Matériau haute température selon l'une des revendications 1 à 3 précédentes, dans lequel le manganèse se présente sous forme de dispersion d'oxyde dans l'alliage de fer formant de l'oxyde de chrome.

5. Matériau haute température selon l'une des revendications 1 à 4 précédentes, dans lequel l'alliage de fer formant de l'oxyde de chrome présente en outre jusqu'à 1 % en poids d'au moins un élément du groupe (C, N, S, B ou P).

6. Matériau haute température selon l'une des revendications 1 à 5 précédentes, dans lequel l'alliage de fer formant de l'oxyde de chrome présente en outre jusqu'à 1 % en poids de V et/ou de Cu.

7. Matériau haute température selon l'une des revendications 1 à 6 précédentes, dans lequel l'alliage de fer formant de l'oxyde de chrome présente jusqu'à 1 % en poids au moins d'un élément du groupe (Mo, W, Nb, Ta ou Re).

8. Plaque bipolaire en un matériau haute température selon l'une des revendications 1 à 7 précédentes.

9. Bougie d'allumage en un matériau haute température selon l'une des revendications 1 à 7 précédentes.

10. Electrode en un matériau haute température selon l'une des revendications 1 à 7 précédentes.
